**Europäisches Patentamt**

**European Patent Office**

**Office européen des brevets**

(11) Publication number : **0 505 304 A2**

(12) **EUROPEAN PATENT APPLICATION**

(21) Application number : **92480022.0**

(22) Date of filing : **11.02.92**

(51) Int. Cl.⁵ : **G06F 3/16**

(30) Priority : **19.03.91 US 671329**

(43) Date of publication of application :
**23.09.92 Bulletin 92/39**

(84) Designated Contracting States :
**BE CH DE ES FR GB IT LI NL SE**

(71) Applicant : **International Business Machines
Corporation
Old Orchard Road
Armonk, N.Y. 10504 (US)**

(72) Inventor : **Lemaire, Charles Arthur
333 Central Avenue
Zumbrota, MN 55992-1057 (US)**
Inventor : **Savage, Marilyn Ethel
39 Pond Brook Circle
Weston, Massachusetts 02193 (US)**
Inventor : **Striemer, Cathy Ann
300 1/2 Jefferson Drive
Zumbrota, MN 55992 (US)**
Inventor : **Striemer, Brian Lester
300 1/2 Jefferson drive
Zumbrota, MN 55992 (US)**

(74) Representative : **Vekemans, André
Compagnie IBM France Département de
Propriété Intellectuelle
F-06610 La Gaude (FR)**

(54) **Portable computer device for audible processing of electronic documents.**

(57) A battery powered hand-held portable computer device (10) for audible processing of electronic documents. A number of electronic documents in digital data format are coupled to and stored within random access memory,(54, 56, 58, 60), within the portable computer device via an interface (42) from a host computer (44), as strings of characters which may comprise encoded words, syllables or phonetic codes. The portable computer device preferably utilizes a limited number of tape recorder-like switches (30, 32, 34, 36, 38). In response to a single operation of a "play" switch (30), these electronic documents are then sequentially coupled to a text-to-speech conversion application and converted to audible speech through a speaker or headphone (18). In one embodiment of the present invention the portable computer device includes a microphone (24) and analog-to-digital conversion circuitry which permit a spoken input to be digitized, stored, and replayed in conjunction with a selected electronic document. In a scanning mode of operation, each electronic document may be sequentially accessed and the author, subject matter and length of that document announced audibly to the user. Further, all electronic documents may be sequentially searched to locate each instance of a selected textual entry by a simple manipulation of switch devices.

Fig. 2

The present invention relates in general to the field of improved computer devices and in particular to improved computer devices which permit the audible processing of electronic documents. Still more particularly, the present invention relates to a simplified user interface which permits the audible processing of electronic documents in a portable battery powered computer device.

The modern electronic office represents a substantial increase in the productivity and accuracy with which documents may be processed. The modern electronic office permits a single user to process large amounts of information and rapidly and efficiently direct that information to various other users, sometimes separated by thousands of miles. However, this increase in efficiency carries with it a certain lack of flexibility in that a user must be in his or her office, at the desk, logged into a computer in order to accomplish this work.

Modern systems permit the so-called "telecommuter" to extend the virtual office by connecting home computers to a central computer system utilizing telephone lines. It is also possible to work with stand-alone computers, transferring the work accomplished at such a computer when it is reconnected to the main system. This stand-alone mode of operation is generally done on portable, laptop computers, giving the computer user a great degree of mobility.

One problem which exists with the utilization of laptop computers is that such units are quite large and bulky or, in the alternative, have small screens and keyboards which are difficult to use. There are also times when a computer user may not have free use of his or her hands and eyes but would still be able to process electronic documents if an appropriate interface were possible. For example, it would be efficient to permit a computer user to process electronic mail while driving; however, the inability of current computer devices to permit the processing of electronic documents without reference to a display screen and keyboard makes this impossible.

A recognition in the industry that keyboards and display screens cannot possibly achieve a sufficiently small size while remaining utilitarian has lead to the development of digital organizers and recently, a "palm top" computer which typically utilizes an icon based user interface with a pointing device, such as a pen. These devices have no keyboard and no capability of attaching a keyboard. The primary input to such devices is through character recognition and a pointing device. While these devices can generally recognize printed letters, the difficulty involved in utilizing such devices in hand occupied environments will prevent these devices from achieving universal acceptance.

A likely user interface between a portable electronic device and a user in a hand occupied environment is human speech. Various attempts at achieving such a system have been attempted in the past; however, the interface between the device and the user has always proven to be a difficult hurdle to overcome. For example, a dictation system was disclosed in International Business Machine's Technical Disclosure Bulletin, Volume 22, No. 4, in September of 1979, which utilizes solid-state memory devices to store voice input in a digitized format. The system then connects to a host for information transfer; however, the dictation system disclosed therein does not permit a user to process electronic documents.

One attempt at providing audible output associated with textual documents is disclosed in U.S. Patent No. 4,685,135 . This system utilizes the well known Naval Research Laboratory text-to-speech algorithm; however, there is no discussion in this patent of an interface which must be utilized to permit a user to process electronic documents utilizing such a device.

Australian Patent 8,319,856 discloses a hand held speech generator which utilizes a keyboard containing phoneme keys and editing keys which represent different spoken sounds through which the final audible word may be created. The editing keys provide means for inserting spaces or pauses, backspacing, deleting words or inserting predefined strings. Such a device may be utilized by a user who is mute to generate spoken language for utilization on a telephone or other communications device; however, there is no discussion in this disclosure of a manner in which synthetically generated speech may be utilized to permit the processing of electronic documents.

U.S. Patent No. 4,749,353 discloses a talking electronic learning aid for improvement of spelling which utilizes an operator controlled word list. This device permits a predetermined list of words to be synthetically spoken by storing a plurality of filter coefficients within memory which may be utilized to control the operation of a linear predictive coding voice synthesizer. Each piece of vocabulary which may be uttered by the device must be processed in a sophisticated manner to determine what those filter coefficients must be. The talking electronic learning aid thus may not be utilized to efficiently process electronic documents.

In view of the above, it should be apparent that a need exists for a portable electronic computer device which may be utilized by a user to process electronic documents which are stored in a textual data format, as such documents are typically stored in a traditional computer system. Further, the size and portability constraints of such a device are such that the user interface required to operate this device should be simple enough to permit basic processing to be accomplished utilizing a minimal number of controls, thus obviating the requirement for a full keyboard. Such a device should also have the capability of receiving user input in the form of audible speech and associating that input with a selected electronic document for future processing.

It is therefore one object of the present invention to provide an improved computer device.

It is another object of the present invention to provide an improved portable computer device which permits the audible processing of electronic documents which are stored in digital data format.

It is yet another object of the present invention to provide a simplified user interface which permits the audible processing of electronic documents stored in digital data format within a portable battery powered computer device.

The foregoing objects are achieved as is now described. A battery powered hand-held portable computer device for audible processing of electronic documents is utilized to store a number of electronic documents in digital data format. The electronic documents are preferably coupled to and stored within random access memory within the portable computer device from a host computer, as strings of characters which may comprise encoded words, syllables or phonetic codes. The portable computer device preferably utilizes a limited number of tape recorder-like switches. In response to a single operation of a "play" switch these electronic documents are then sequentially coupled to a text-to-speech conversion application and converted to audible speech through a speaker or headphone. In one embodiment of the present invention the portable computer device includes a microphone and analog-to-digital conversion circuitry which permit a spoken input to be digitized and stored in conjunction with a selected electronic document. In a scanning mode of operation, each electronic document may be sequentially accessed and the author, subject matter and length of that document announced audibly to the user. Further, all electronic documents may be sequentially searched to locate each instance of a selected textual entry by a simple manipulation of switch devices.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a pictorial view of the portable computer device of the present invention;

Figure 2 is a high level block diagram of the electronic circuitry which may be utilized to implement the portable computer device of Figure 1;

Figure 3 is a high level flow chart illustrating the polling of each switch of the portable computer device of Figure 1;

Figure 4 is a high level flow chart illustrating the "play" mode of the portable computer device of Figure 1;

Figure 5 is a high level flow chart illustrating the "fast forward," "rewind," and "record" modes of the portable computer device of Figure 1; and

Figure 6 is a high level flow chart illustrating the various "function" modes of the portable computer device of Figure 1.

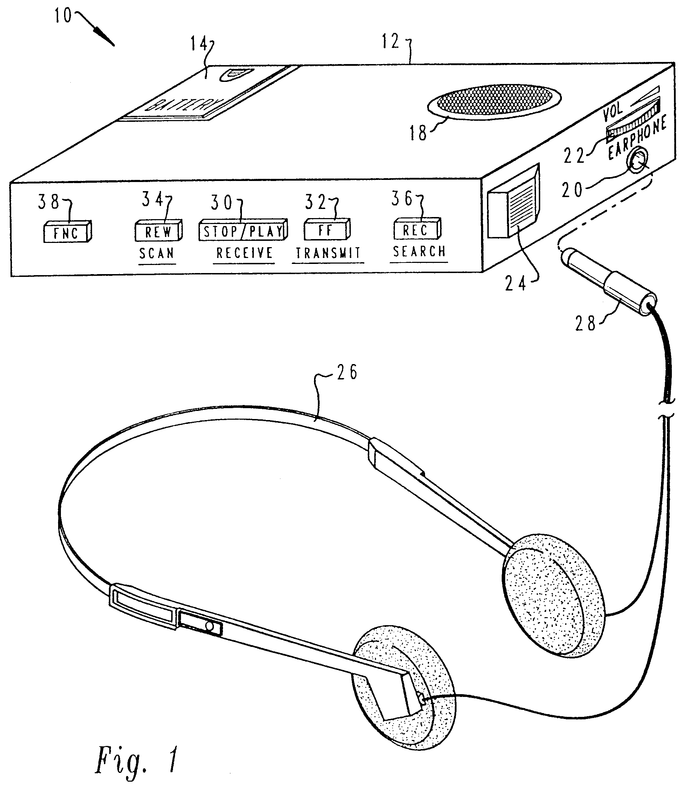

With reference now to the figures and in particular with reference to Figure 1, there is depicted a pictorial view of portable computer device 10 of the present invention. As is illustrated, portable computer device 10 is preferably mounted within a case 12 which is constructed utilizing molded plastic or other similar light weight rigid materials. Case 12 is preferably sufficiently small so as to permit portable computer device 10 to be easily carried with a user and is preferably battery powered utilizing a standard storage battery 16 (not shown) which is contained within battery compartment 14.

In accordance with an important feature of the present invention portable computer device 10 includes an audio output device, such as speaker 18, which is utilized to permit the audible processing of electronic documents in a manner which will be explained in greater detail herein. Alternatively, the audio output of portable computer device 10 may be coupled to earphone jack 20 so that electronic documents may be audibly processed without disturbing others in the vicinity of portable computer device 10. Alternatively, portable computer device 10 may be variously coupled to a home stereo system, or to a portable tape recorder.

For such processing, an earphone device 26 may be utilized in conjunction with an earphone plug 28 which is designed to interconnect earphone device 26 with earphone jack 20 in a manner well known in the art. Preferably, volume switch 22 is provided to vary the audible output of portable computer device 10 to achieve an optimum level of volume which permits the accurate understanding of the output thereof without disturbing others in the vicinity of portable computer device 10.

Another important feature of portable computer device 10 is the provision of microphone 24. Microphone 24 is preferably a miniature microphone of any type well known in the art, and may be utilized, in a manner which will be explained in greater detail herein, to permit the user of portable computer device 10 to enter a spoken utterance which will then be digitized and stored in conjunction with an electronic document.

In accordance with an important feature of the present invention, portable computer device 10 preferably utilizes a simplified interface containing a minimal number of switches. The embodiment depicted includes five such switches and these switches are labeled and utilized in a manner very similar to the controls of an analog tape recorder. Thus, stop/play switch 30 may be utilized to initiate and terminate the processing of electronic documents. Similarly, fast forward switch 32 may be utilized to skip forward through a sequential series of electronic documents to locate a particular electronic document, in a manner very similar to this function with an analog tape recorder device. Conversely, rewind switch 34 may be utilized to move backward through a sequential series of electronic documents to locate a document previously processed or selectively omitted, in manner which will be explained in much greater detail herein.

In defining the operation of the "switch means" which activate the start/stop function and other features of this invention, the described embodiment implements the "switch means" utilizing buttons which activate electronic circuitry. Another preferred embodiment may utilize "switch means" which consist of an audio microphone connected to signal processing means whereby the apparatus may be voice-activated, either by sound in general, specific sounds, or ultimately by recognition of specific words. These signal processing means are well known to those skilled in the art of voice-activation and are not further described here.

Another possible "switch means" may include any of a number of possible electromagnetic radiation activatable devices such as activation of the start function by detection of the spark-plug noise from a car, if the operator wishes to process documents only while driving, or activation by ultraviolet light for listening outdoors.

Further, the embodiment described herein discloses the activation of the apparatus as being controlled by a "single operation" of the switch means. Those skilled in the art will realize that a double-click of a switch, such as is utilized to activate the switch functions on a mouse device connected to an IBM PS/2 personal computer, is often a preferred activation indication so as prevent accidental activation of some feature. Thus, for purposes of this disclosure a "single operation" of the switch means is intended to encompass any short-term manipulation or other actuation of the switch means which might be recognized by the processing means in the apparatus as being a unique signal from a human operator or other controlling device of the apparatus which is intended to activate any particular feature

Examples of such "single operation of a switch means" activation may include pressing the same button twice within 0.33 seconds, pressing one button and holding it down while then pressing a second button, or uttering a verbal phrase such as: "START START START" into a microphone.

Additionally, record switch 36 may be utilized, in the manner described herein, to activate microphone 24 such that a limited amount of audible speech may be entered, digitized and stored in conjunction with a digital representation of an electronic document for future processing. Finally, function switch 38 is utilized to permit various administrative tasks to be accomplished by the above-described switches by assigning each such switch an alternate function if it is operated while function switch 38 is depressed. Thus, stop/play switch 30 may be utilized to initiate the reception of electronic documents from a host computer via an interface (not shown) in a manner well known to those skilled in the art of interchanging electronic documents. Similarly, fast forward switch 32 may be utilized to initiate the transmittal of electronic documents from portable computer device 10 to a host computer via an interface in a similar manner.

As illustrated in Figure 1, rewind switch 34 may be utilized to "scan" from one electronic document to the next sequential electronic document when rewind switch 34 is operated in conjunction with function switch 38. Finally, record switch 36 may be utilized, in accordance with the description contained herein, to permit the rapid and efficient search through a plurality of electronic documents to locate the next instance of a particular textual item.

Thus, upon reference to Figure 1, those skilled in the art will appreciate that the Applicants herein have disclosed a portable computer device which may be utilized to audibly process a plurality of electronic documents which includes a simple and efficient user interface which permits those only rudimentarily skilled in the electronic arts to efficiently process a plurality of electronic documents without requiring a keyboard or visual display interface.

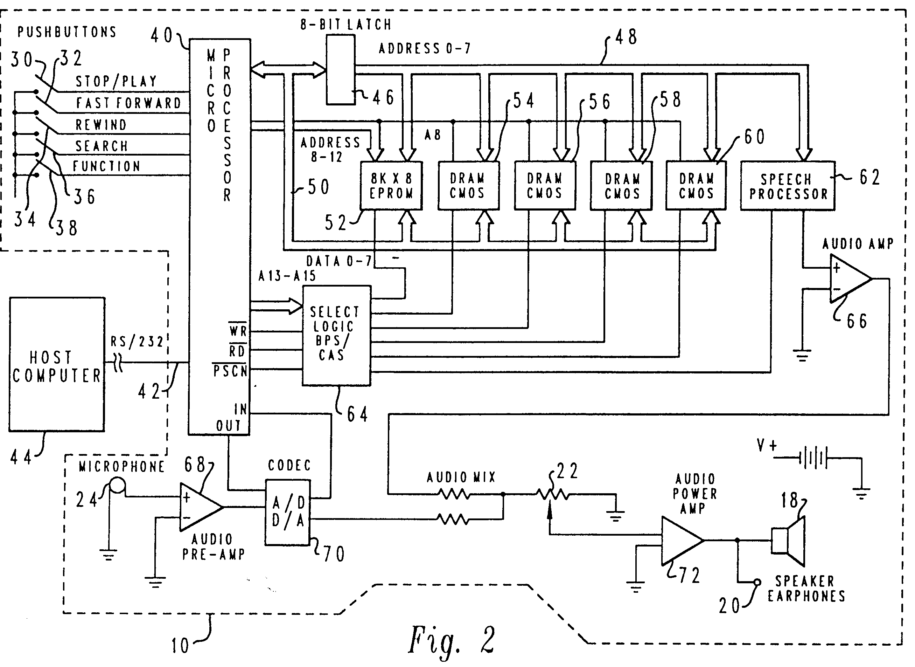

Referring now to Figure 2, there is depicted a high level block diagram of the electronic circuitry of portable computer device 10 of Figure 1. Where appropriate each item within Figure 2 which has an analogous structure within Figure 1 has been labeled utilizing similar reference numerals to aid in the description herein. Thus, stop/play switch 30, fast forward switch 32, rewind switch 34, record switch 36 and function switch 38 are all labeled similarly within Figure 2. As is illustrated, each of these switches is coupled to and scanned by a microprocessor 40. Microprocessor 40 may be implemented utilizing any suitable microprocessor, such as the 80C31, manufactured by Intel Corporation and others, an eight bit microprocessor. Microprocessor 40 is intermittently couplable to host computer 44 via interface 42. Interface 42 is preferably an RS/232 interface or any other suitable interface, such as an infrared link, which may be utilized to transfer electronic documents in a digital data format from host computer 44 to microprocessor 40.

Microprocessor 40 is also coupled to a read only memory 52 and random access memory chips 54, 56, 58 and 60, via address latch 46, address bus 48 and data bus 50. Additionally, microprocessor 40 is coupled to speech processor 62. Speech processor 52 is preferably a single chip large scale integration device such as the Federal Screw Works Votrax SC-02 or any other similar software code-based speech synthesis, which utilizes a stored program to create synthetic speech from synthesized allophones or stored encodes representing human speech phonemes. Speech processor 62, when implemented utilizing the aforementioned chip, creates a software programmable digital filter which may be utilized to emulate the human vocal tract.

Microprocessor 40 may then be utilized to link speech signal elements together and provide the amplitude and pitch information necessary to excite the digital filter contained within speech processor 62 in order to create synthetic speech. This is preferably accomplished in the portable computer device of the present invention by utilizing well known text-to-speech conversion rules, such as those created by the Naval Research Laboratory.

In accordance with an important feature of the present invention these text-to-speech rules are preferably stored within one of the aforementioned random access memory chips, in order that the user may modify the rules utilized to pronounce correctly selected specialized vocabulary words, in a manner well known to those ordinarily skilled in the text-to-speech conversion art.

Also preferably stored within random access memory chips 54, 56, 58 and 60 are a plurality of electronic documents, in a textual data format. These documents are preferably downloaded from host computer 44 via interface 42 and stored for processing within the random access memory thus provided.

A read only memory chip 52 is preferably utilized to store that information which is utilized to interface microprocessor 40 with host computer 44 via interface 42, the DRAM refresh and virtual address control and such control information when maybe utilized to record and digitize speech input, in any manner well known to those skilled in this art. Additionally, timing control and the administrative control of speech processor 62 are preferably accomplished utilizing information stored within read only memory 52, in a manner consistent with the component utilized to implement speech processor 62.

Thus, upon the operation of stop/play switch 30, microprocessor 40 first determines whether or not the device is in the "stop" or "play" mode, since this switch may be utilized to toggle back and forth between these two modes. Thereafter, the initiation of the "play" mode is accomplished by microprocessor 40 by accessing the first electronic document stored within random access memory. The textual data stored therein is then coupled to the text-to-speech application previously described. The speech signals generated by the text-to-speech application are then coupled to speech processor 62, in order to create audible speech which corresponds to the textual data contained within each electronic document. The output of speech processor 62 is then preferably coupled to audio amplifier 66, through volume control 22 to audio power amp 72 for eventual output via speaker 18 or speaker earphone plug 20.

In accordance with another novel feature of the present invention, microphone 24 provided with portable computer device 10 may be utilized by the user thereof to input audible speech which is then amplified utilizing audio preamplifier 68 and coupled to CODEC circuity 70. CODEC circuit 70 is preferably utilized to perform analog-to-digital conversion or digital-to-analog conversion, as required, and the speech input thus digitized may be stored within random access memory by microprocessor 40 in association with a selected electronic document.

Thus, should the operator of portable computer device 10 desire to input a selected comment with regard to a particular electronic document, the operation of the record control in a manner which will be described in greater detail herein will permit the input of a selected amount of digitized speech which, after digitization, is then stored at a specified location in conjunction with an electronic document for subsequent processing.

Additionally, an output of CODEC circuit 70 is also coupled, via volume control 22 and audio power amp 72 to either speaker 18 or speaker earphone jack 20 in order that the operator may assure himself or herself that recording is taking place by providing an amplified feed back signal or, alternatively, by generating an appropriate series of tones indicating the recording mode. Finally, battery 16 is depicted within portable computer device 10 and is utilized to provide electrical power to the components contained therein. By utilizing low voltage, low power consumption CMOS devices portable computer device 10 depicted herein may be operated for a substantial period of time utilizing a common storage cell battery.

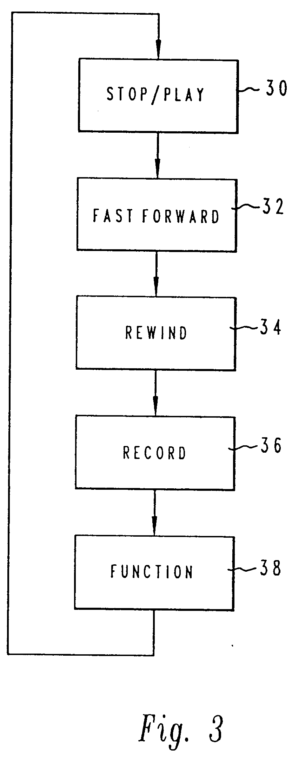

With reference now to Figure 3, there is depicted a high level flow chart illustrating the polling of each switch of portable computer device 10 of Figure 1. As illustrated, each of the five switches is polled sequentially at a rate of approximately one hundred (100) microseconds per cycle. Thus, the effect of operation of any of the switches thus depicted will be detected in a rapid manner and may then be utilized to vary the operation of portable computer device 10 in a manner which will be described within the remaining figures. This polling of each switch of portable computer device 10 forms a portion of each of the remaining high level block diagrams and is included therein to assist in the description of the manner in which the present invention operates.

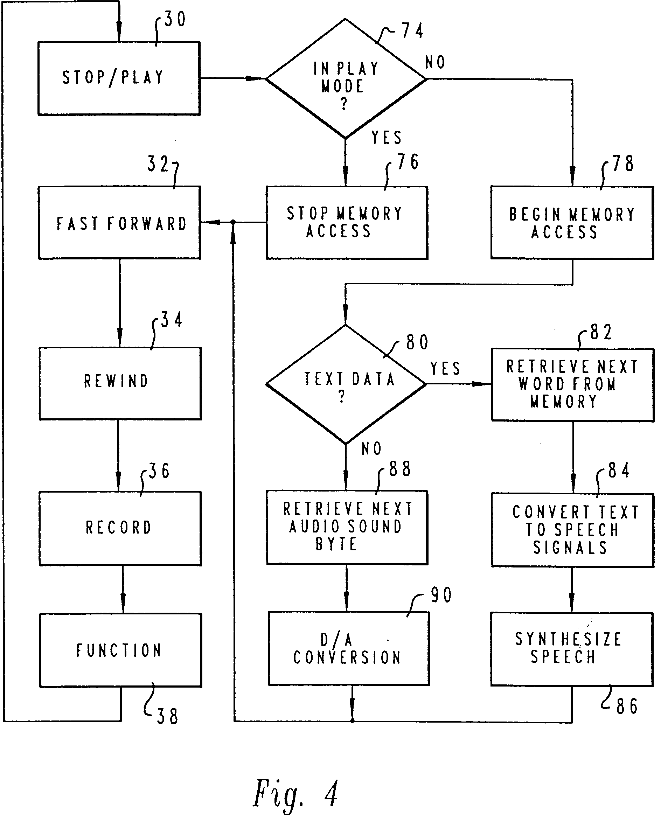

With reference now to Figure 4 there is depicted a high level flow chart illustrating the "play" mode of the portable computer system of Figure 1. As illustrated, during the polling of each switch of portable computer device 10 a detection of the operation of stop/play switch 30 has occurred. Thereafter, the process passes to block 74 which illustrates a determination of whether or not portable computer device 10 is in the "play" mode. This is necessary since stop/play switch 30 may be toggled to alternate the operation of portable computer device 10 between the "stop" mode and the "play" mode. If portable computer device 10 is in the "play" mode, as determined in block 74, then the process passes to block 76 which illustrates the stopping of memory access and the process returns to block 32 to continue polling each switch of portable computer device 10 in the manner described above.

However, in the event portable computer device 10 is in the "stop" mode, as determined in block 74, then the process passes to block 78 which illustrates the beginning of memory access within portable computer device 10. Next, block 80 illustrates a determination of whether or not the data within the random access memory chips described above is textual data. In the depicted embodiment of the present invention data stored within random access memory may include both electronic documents in a textual data format and digitized sound, either recorded by the user or downloaded from a host computer.

In the event the memory access begins with textual data, as determined in block 80, the process passes to block 82 which illustrates the retrieval of the next textual word from memory. Thereafter, that word is converted to speech signals, as illustrated in block 84 and those speech signals are then utilized to synthesize speech by means of speech processor 62 in the manner described above. This process continues until such time as all data has been accessed from random access memory or stop/play switch 30 has been operated again, returning portable computer device 10 to the "stop" mode.

Referring again to block 80, in the event the data stored within random access memory and currently being accessed comprises digitized audio sound the process passes to block 88 which illustrates the retrieval of the next audio sound byte. This audio sound byte is then converted to an analog signal, as illustrated in block 90 and the process continues as described above. Thus, upon reference to Figure 4 those skilled in the art will appreciate that the operation of stop/play switch 30 may be utilized to terminate the audible output of portable computer device 10 or to initiate the sequential access of all electronic documents and/or audio sound bytes stored within random access memory and audible processing of that data in the manner described therein.

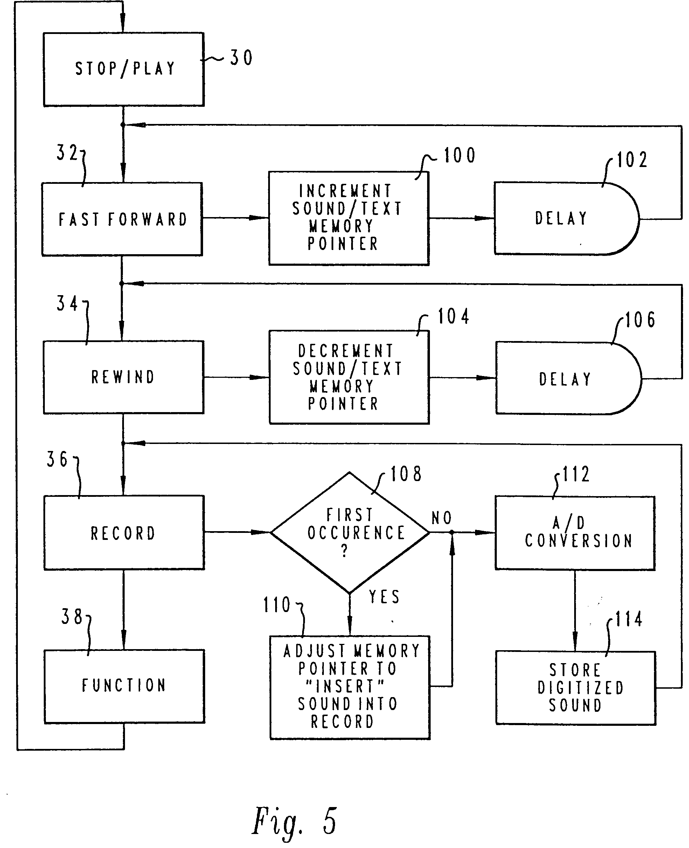

With reference now to Figure 5, there is depicted a high level flow chart illustrating the "fast forward," "rewind," and "record" modes of portable computer device 10 of Figure 1. As above, this process is initiated during the polling of each switch of portable computer device 10. In the event fast forward switch 32 has been operated the process passes to block 100. Block 100 illustrates the incrementing of the sound/text memory pointer to a subsequent location within the random access memory chips described above. The process then continues throughout a predetermined delay, as illustrated at block 102 and then returns to block 32 to determine whether or not fast forward switch 32 is still closed.

Rewind switch 34 operates in a similar manner. After polling each switch and determining that rewind switch 34 has been operated the process passes to block 104 which illustrates the decrementing of the sound/text memory pointer to an earlier location within memory. After a predetermined delay, as illustrated in block 106, the process again returns to the polling procedure to determine whether or not rewind switch 34 remains closed.

Next, in the event the polling of each switch within portable computer device 10 indicates that record switch 36 has been operated, the process passes to block 108. Block 108 illustrates a determination of whether or not this is a first occurrence of the operation of record switch 36 and if so, the process passes to block 110 which adjusts the memory pointer to "insert" a digitized sound segment into the record of the electronic document currently being processed. Those skilled in the art will appreciate that unlike analog recording techniques a digital memory system permits extreme flexibility with regard to the ability of the user to insert text or sound into a digital record by the mere adjustment of a memory pointer in the manner described.

Thereafter, or in the event this is not the first detection of the operation of record switch 36, the process passes to block 112 which illustrates the analog-to-digital conversion of the audio input. Thereafter, block 114 illustrates the storing of the digitized sound and the process again returns to continue polling the switches of portable computer device 10.

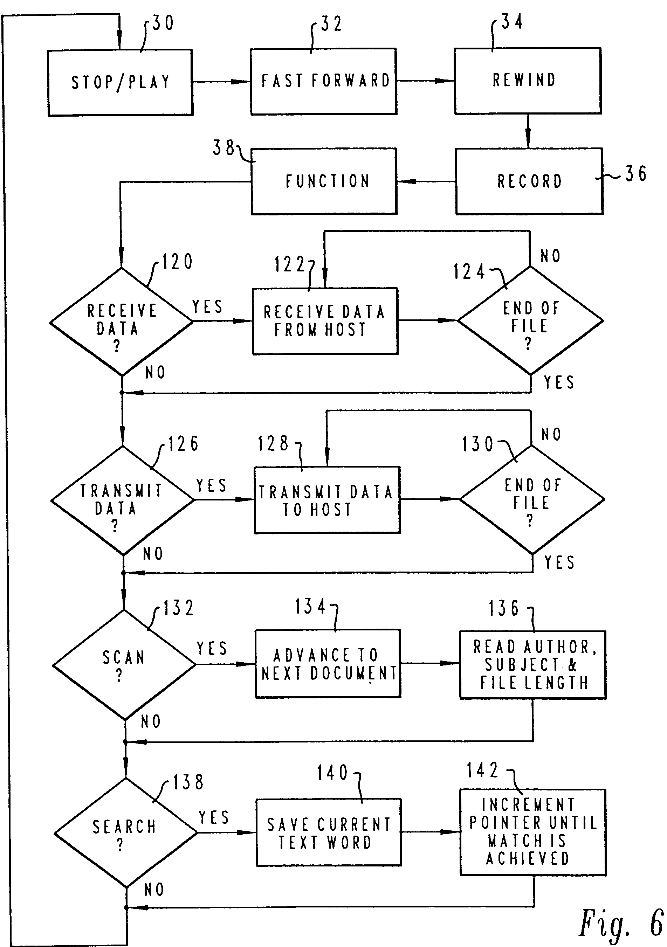

Finally, referring to Figure 6 there is depicted a high level flow chart illustrating the various "function" modes of portable computer device 10 of Figure 1. As described with respect to Figure 1 portable computer device 10 includes a function switch 38 which, when operated, serves to invest in each of the remaining switches a secondary operational characteristic. Thus, when function switch 38 has been operated the polling of each switch of portable computer device 10 is utilized to determine if another switch within portable computer device 10 has been operated. In the depicted embodiment of the present invention, stop/play switch 30, when operated in conjunction with function switch 38, is utilized to initiate the reception of electronic documents or other data from host computer 44 (see Figure 2) in a manner well known in the digital computer art. Similarly, fast forward switch 32, when operated in conjunction with function switch 38, is utilized to initiate the transmittal of data from portable computer device 10 to host computer 44 in the same manner.

Rewind switch 34, when operated in conjunction with function switch 38 is operative to place portable computer device 10 in the "scan" mode which permits an operator to rapidly and efficiently determine selected information with regard to those electronic documents stored within portable computer device 10. Finally, record switch 36, when operated in conjunction with function switch 38, is effective to initiate a "search" mode which permits the operator to rapidly and efficiently locate the next instance of a particular textual item.

Thus, after polling each switch of portable computer device 10 and finding function switch 38 has been operated the process passes to block 120. Block 120 illustrates a determination of whether or not the receive data mode has been selected, as indicated by the operation of both stop/play switch 30 and function switch 38. If so, the process passes to block 122 which illustrates the reception of data from the host computer (see Figure 2). Thereafter, the process passes to block 124 which illustrates a determination of whether or not the end of the file has occurred. If not, the process merely iterates until such time as the end of a selected file does occur.

Thereafter, the process passes to block 126 which illustrates a determination of whether or not a transmit data mode is desired, as initiated by the operation of both fast forward switch 32 and function switch 38. In such case the process passes to block 128 which illustrates the transmittal of data to the host computer (see Figure 2) in a manner well known in the electronic art. In a manner similar to that described above, block 130 then illustrates a determination of whether or not the end of the file being transmitted has occurred and the process either iterates or terminates in response to such determination.

Next, block 132 illustrates a determination of whether or not the operator of portable computer device 10 has requested the "scan" mode. This is determined by an operation of both rewind switch 34 and function switch 38. When operated in the "scan" mode portable computer device 10 operates in the manner depicted in block 134 by advancing to the next document stored, in sequential order within the random access memory chips within portable computer device 10. Thereafter, block 136 illustrates the reading of the author, subject, and file length for that particular document. These selected textual items are retrieved and coupled to the text-to-speech conversion application and speech processor 62 in the manner described above. In this manner, the user of portable computer device 10 may rapidly and efficiently determine the author, subject matter and length of each electronic document within portable computer device 10.

Finally, block 138 illustrates a determination of whether or not the "search" mode is desired. This is initiated by an operation of both record switch 36 and function switch 38 in the manner described above. Upon the detection of a request for this mode of operation block 140 illustrates the saving of the current text word. Thereafter, block 142 illustrates the incrementing of the pointer through random access memory until a match is achieved with the saved current text word. In this manner, the user of portable computer device 10 may rapidly and efficiently search through a plurality of electronic documents to locate each instance of a particular word or group of words, thus rendering the processing of these documents highly efficient.

## Claims

1. A portable hand-held computer device for processing electronic documents, said portable hand-held computer device comprising:

   processor means;

   memory means coupled to said processor means for storing a plurality of electronic documents in a digital data format;

   digital data-to-speech conversion means coupled to said processor means for generating speech signals representative of digital data;

   audio output means coupled to said digital data-to-speech conversion means for creating audible speech from said speech signal; and

   first switch means coupled to said processor means for causing said plurality of electronic documents to be coupled to said digital data-to-speech conversion means in a serial fashion in response to single operation thereof.

2. The portable hand-held computer device for processing electronic documents according to Claim 1, wherein said first switch means causes said coupling of said plurality of electronic documents to said digital data-to-speech conversion means to cease in response to a second operation thereof.

3. The portable hand-held computer device for processing electronic documents according to Claim 1, wherein said audio output means comprises a speaker.

4. The portable hand-held computer device for processing electronic documents according to Claim 1, further including audio input circuitry for receiving audible speech and generating a plurality of digital signals corresponding thereto.

5. The portable hand-held computer device for processing electronic documents according to Claim 1, wherein said audio input circuitry is coupled to said processor means and wherein said portable hand-held computer device includes second switch means for causing said plurality of digital signals corresponding to said audible speech to be coupled to said memory means and stored therein in response to a single operation thereof.

6. A portable hand-held computer device for processing electronic documents according to Claim 5, further including means for generating an audible indication of actuation of said second switch means.

7. The portable hand-held computer device for processing electronic documents according to Claim 1, further including interface means coupled to said processor means for coupling said portable hand-held computer to a host computer.

8. The portable hand-held computer device for processing electronic documents according to Claim 1, wherein said interface means may be utilized to couple said plurality of electronic documents in a digital data format from said host computer to said portable hand-held computer device.

9. The portable hand-held computer device for processing electronic documents according to Claim 1, wherein said portable hand-held computer device includes a battery for providing electrical power thereto.

10. The portable hand-held computer device for processing electronic documents according to Claim 1, further including a plurality of digitized audio signals stored within said memory means and digital-to-analog conversion means and wherein a single operation of said first switch will cause said plurality of digitized audio signals to be coupled in a serial fashion to said digital-to-analog conversion means.

11. The portable hand-held computer device for processing electronic documents according to Claim 10, wherein said plurality of digitized audio signals comprises a plurality of encodes representing human speech phonemes.

12. A portable hand-held computer device for processing electronic documents according to any one of claims 1-11 said portable hand-held computer device further comprising:
   scan switch means coupled to said processor means for sequentially accessing an individual electronic document within said plurality of electronic documents and for coupling selected digital data from said individual electronic document to said digital data-to-speech conversion means in response to an operation thereof.

13. The portable hand-held computer device for processing electronic documents according to Claim 12, wherein said selected digital data comprises an indication of author and subject matter of said individual electronic document.

14. The portable hand-held computer device for processing electronic documents according to Claim 13, wherein said selected digital data further comprises an indication of the length of said individual electronic document.

15. A portable hand-held computer device for processing electronic documents according to any one of claims 1-14 said portable hand-held computer device further comprising:
   search switch means coupled to said processor means for sequentially accessing said plurality of electronic documents to locate an occurrence of a selected word within said plurality of electronic documents in response to an operation thereof.

Fig. 1

Fig. 2

Fig. 3

Fig. 4

*Fig. 5*

Fig. 6